# EUROPÄISCHE PATENTSCHRIFT

(11) **EP 2 764 033 B1**
(45) Veröffentlichungstag und Bekanntmachung des Hinweises auf die Patenterteilung: **17.06.2015**
(21) Anmeldenummer: 12769403.2
(22) Anmeldetag: 01.10.2012
(51) Int. Cl.: C08G 59/00

(54) **EPOXIDHARZ-ZUSAMMENSETZUNGEN, ENTHALTEND EIN 2-OXO-[1,3]DIOXOLANDERIVAT**
EPOXY RESIN COMPOSITIONS, CONTAINING A 2-OXO-[1,3]DIOXOLANE DERIVATIVE
COMPOSITIONS DE RÉSINE ÉPOXY CONTENANT UN DÉRIVÉ DE 2-OXO-[1,3]DIOXOLANE

(30) Priorität: 04.10.2011 EP 11183763
(43) Veröffentlichungstag der Anmeldung: 13.08.2014
(73) Patentinhaber: BASF SE, 67056 Ludwigshafen (DE)
(72) Erfinder: KLOPSCH, Rainer, 67551 Worms (DE); YU, Miran, 67065 Ludwigshafen (DE)
(86) Internationale Anmeldenummer: PCT/EP2012/069304
(87) Internationale Veröffentlichungsnummer: WO 2013/050311

(56) Entgegenhaltungen:
- EP-A1- 0 001 088
- EP-A2- 0 656 384
- WO-A1-2010/089264

## Beschreibung

Die vorliegende Anmeldung schließt durch Verweis die am 04.10.2011 eingereichte vorläufige US-Anmeldung 61/542828 ein.

Die Erfindung betrifft Epoxidharz-zusammensetzungen, enthaltend
a) Epoxidharze und
b) mindestens ein 2-Oxo-[1,3] dioxolanderivat der Formel I 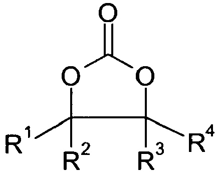
worin einer oder zwei der Reste R1 bis R4 für eine elektronenziehende organische Gruppe mit 1 bis 20 C-Atomen oder ein elektronenziehendes Heteroatom stehen und die übrigen Reste R1 bis R4 unabhängig voneinander für ein H-Atom oder eine Kohlenwasserstoffgruppe mit 1 bis 20 C-Atomen stehen.

Als Epoxidharze (auch Epoxyharze genannt) bezeichnet man üblicherweise oligomere Verbindungen mit im Mittel mehr als einer Epoxidgruppe pro Molekül. Diese können durch Umsetzung mit geeigneten Härtern oder durch Polymerisation der Epoxidgruppen in Duroplaste umgewandelt werden. Gehärtete Epoxidharze sind aufgrund ihrer hervorragenden mechanischen und chemischen Eigenschaften, wie hohe Schlagzähigkeit, hohe Abriebfestigkeit, gute Chemikalienbeständigkeit, insbesondere eine hohe Beständigkeit gegenüber Laugen, Säuren, Ölen und organischen Lösungsmitteln, hohe Witterungsbeständigkeit, ausgezeichnete Haftfähigkeit auf vielen Werkstoffen und hohes elektrisches Isolationsvermögen, weit verbreitet.

Durch Umsetzung mit Härtern werden die Epoxidharz-Präpolymere in nicht schmelzbare, dreidimensional "vernetzte", duroplastische Materialien überführt. Geeignete Härter sind Verbindungen mit wenigstens zwei funktionellen Gruppen, welche mit den Epoxydgruppen (auch Oxiran-gruppen genannt) und/oder Hydroxygruppen der Epoxidharze-Präpolymere unter Ausbildung kovalenter Bindungen reagieren können, z. B. Verbindungen mit Aminogruppen, Hydroxygruppen und Carboxylgruppen bzw. Derivate davon, wie Anhydride. Dementsprechend werden üblicherweise als Härter für Epoxidharze aliphatische und aromatische Polyamine, Carbonsäureanhydride, Polyamidoamine, Aminoplaste oder Phenoplaste eingesetzt.

Die zur Herstellung ausgehärteter Epoxidharze eingesetzten Präpolymere weisen üblicherweise eine hohe Viskosität auf, welche die Anwendung erschwert. Zudem beschränkt die hohe Viskosität der Harze häufig den Einsatz von Füllstoffen, welche zur Modifikation der mechanischen Eigenschaften der ausgehärteten Harzmasse wünschenswert sind. Zudem erlaubt in vielen Fällen die Verwendung von Füllstoffen, die Kosten der aus den Harzen gefertigten Produkte, wie beispielsweise Formteile oder Beschichtungen zu verringern. Daher werden dem ungehärteten Epoxidharz häufig Verdünnungsmittel zugesetzt, welche die Viskosität des Harzes auf den für die Anwendung gewünschten Wert verringern. Geeignete Verdünnungsmittel sind insbesondere Reaktivverdünner. Reaktivverdünner sind Lösungsmittel, welche funktionelle Gruppen aufweisen, welche mit den Epoxidgruppen des Harzes und/oder den funktionellen Gruppen des Härters unter Ausbildung kovalenter Bindungen reagieren, das können z. B. Verbindungen sein, die wiederum Oxirangruppen enthalten. Reaktivverdünner sind insbesondere Glycidylether polyfunktioneller aliphatischer Alkohole wie 1,4-Butandioldiglycidylether, 1,6-Hexandioldiglycidylether, Diethylenglykoldiglycidylether oder Glycidylether des Trimethylolpropans. Insbesondere sind auch monofunktionelle Reaktivverdünner geeignet, exemplarische genannt seien z. B. C12- bis C14 Fettalkoholglycidylether.

Aus der noch nicht veröffentlichten WO Anmeldung PCT/EP2011/059767 (PF 70167) sind Epoxidharz-zusammensetzungen bekannt, welche als Verdünnungsmittel ein 2-Oxo-(1,3) dioxolanderivat enthalten, bei dem ein C-Atom des Ringsystems durch eine Alkylengruppe, z. B. Methylen (=CH₂), substituiert ist.

2-Oxo-[1,3] dioxolanderivate der obigen Formel I, sowie ihre Herstellung und Verwendung zur Herstellung von Polyolen oder Hydroxyurethanen sind in den noch nicht veröffentlichten Patentanmeldungen PCT/EP2011/058945 (PF 70965) und EP 10191334.1 (PF 71469) beschrieben.

Grundsätzlich besteht gegenüber dem Stand der Technik die Aufgabe, alternative Verdünnungsmittel für Epoxidharz-zusammensetzungen zu finden, welche die Viskosität herabsetzen und die anwendungstechnischen Eigenschaften, insbesondere die Reaktivität, nicht beeinträchtigen oder sogar weiter verbessern.

Aufgabe der vorliegenden Erfindung waren daher Epoxidharz-zusammensetzungen mit neuen Verdünnungsmitteln, welche die vorstehenden Eigenschaften erfüllen.

### Zu den Epoxidharzen

Als Epoxidharze in Betracht kommen insbesondere solche, die üblicherweise in härtbaren Epoxidharz-zusammensetzungen eingesetzt werden. Genannt seien insbesondere Verbindungen mit 1 bis 10 Epoxidgruppen, vorzugsweise mit mindestens zwei Epoxidgruppen im Molekül. Der Gehalt an Epoxid-Gruppen in typischen Epoxidharzen liegt im Bereich von 120 bis 3000 g/Äquivalent, gerechnet als sogenanntes Epoxidäquivalent gemäß DIN 16945.

Hierunter bevorzugt sind sogenannte Glycidyl-basierte Epoxidharze, insbesondere solche, die durch Veretherung aromatischer, aliphatischer oder cycloaliphatischen Polyole mit Epichlorhydrin hergestellt werden. Derartige Glycidyl-basierte Epoxidharze werden auch als Polyglycidylether von aromatischen, aliphatischen oder von cycloaliphatischen Polyolen bezeichnet.

Bei den Epoxidharzen kann es sich um Flüssigharze, um Festharze oder um Mischungen davon handeln. Flüssigharze unterscheiden sich von Festharzen durch geringere Viskosität. Zudem weisen Flüssigharze in der Regel einen höheren Anteil an Epoxidgruppen und dementsprechend ein niedrigeres Epoxidäquivalent auf.

Der Gehalt an Epoxidgruppen in typischen Flüssigharzen liegt üblicherweise im Bereich von 120 bis 200 g/Äquivalent und der der Festharze im Bereich von 450-3000 g/Äquivalent, gerechnet als sogenanntes Epoxidäquivalent gemäß DIN 16945.

Die Viskosität der Flüssigharze liegt bei 25°C üblicherweise im Bereich von 1 bis 20 Pas, bevorzugt im Bereich von 5 bis 15 Pas. Die Viskosität der der Festharze liegt bei 25°C üblicherweise im Bereich 5 bis 40 Pas, bevorzugt im Bereich von 20 bis 40 Pas. Die hier angegebenen Viskositäten sind die gemäß DIN 53015 bei 25°C als 40%ige Lösungen der Harze in Methylethylketon bestimmten Werte.

Geeignete Epoxidharze sind beispielsweise die unter den Markenbezeichnungen EPILOX®, EPONEX®, EPIKOTE®, EPONOL®, D.E.R, ARALDIT® oder ARACAST® im Handel erhältlich.

In einer bevorzugten Ausführungsform ist das Epoxidharz ausgewählt aus Polyglycidethern aromatischer Polyole.

Beispiele hierfür sind die vom Diglycidylether des Bisphenols A abgeleitetenen Harze (DGEBA-Harze, R' = CH₃) und die vom Bisphenol F abgeleiteten Harze (R' = H), welche sich durch die folgende allgemeine Formel beschreiben lassen: 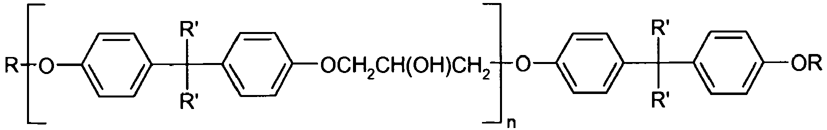 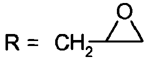 R' = H oder CH₃

In der Formel gibt der Parameter n die Anzahl der Wiederholungseinheiten an, wobei der Mittelwert von n mit dem jeweiligen mittleren Molekulargewicht korrespondiert.

Beispiele für Epoxidharze auf Basis von Polyglycidylethern aromatischer Polyole sind weiterhin Glycidylether von Phenol- und Kresol-basierten Novolaken. Novolake werden durch die säurekatalysierte Kondensation von Formaldehyd und Phenol oder Kresol hergestellt. Durch Umsetzung der Novolake mit Epichlorhydrin erhält man die Glycidylether der Novolake. Insbeondere kommen auch Gemische von unterschiedlichen Polyglycidylethern aromatischer Polyole in Betracht.

In einer anderen bevorzugten Ausführungsform der Erfindung ist das Epoxidharz ausgewählt aus Polyglycidylethern cycloaliphatischer Polyole und den Polyglycidylestern cycloaliphatischer Polycarbonsäuren. Beispiele für Polyglycidylether von cycloaliphatischen Polyolen sind die Kernhydrierungsprodukte von Polyglycidylethern auf Basis von Bisphenol-A, die Kernhydrierungsprodukte von Polyglycidylethern auf Basis von Bisphenol-F, die Kernhydrierungsprodukte von Polyglycidylethern auf Basis von Novolaken und deren Gemische. Derartige Verbindungen werden üblicherweise durch selektive Hydrierung der aromatischen Ringe in den zuvor genannten aromatischen Polyglycidylethern hergestellt. Beispiele für solche Produkte sind das P 22-00 der Fa. LeunaHarze und Eponex 1510 der Fa. Hexion. Beispiele für Polyglycidylester von cycloaliphatischen Polycarbonsäuren ist Hexahydrophthalsäurediglycidylester

Als Epoxidharze für Lackformulierungen sind auch epoxidgruppenhaltige Polyacrylatharze geeignet. Diese werden in der Regel durch Copolymerisation von mindestens einem ethylenisch ungesättigten Monomer, das mindestens eine Epoxidgruppe, insbesondere in Form einer Glycidylethergruppe, im Molekül enthält, mit mindestens einem weiteren ethylenisch ungesättigten Monomer, das keine Epoxidgruppe im Molekül enthält, hergestellt, wobei vorzugsweise wenigstens eines der Comonomere ein Ester der Acrylsäure oder Methacrylsäure ist. Beispiele für die ethylenisch ungesättigte Monomere, die mindestens eine Epoxidgruppe im Molekül enthalten, sind Glycidylacrylat, Glycidylmethacrylat und Allylglycidylether. Beispiele für ethylenisch ungesättigte Monomere, die keine Epoxidgruppe im Molekül enthalten, sind Alkylester der Acryl und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat. Weitere Beispiele für ethylenisch ungesättigte Monomere, die keine Epoxidgruppen im Molekül enthalten, sind Säuren, wie z. B. Acrylsäure und Methacrylsäure. Säureamide, wie z. B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z. B. Vinylacetat und hydroxylgruppenhaltige Monomere, wie z. B. Hydroxyethylacrylat und Hydroxyethylmethacrylat. Das epoxidgruppenhaltige Polyacrylatharz weist üblicherweise ein Epoxidäquivalentgewicht von 400 bis 2500, vorzugsweise 500 bis 1500, besonders bevorzugt 600 bis 1200 auf. Das zahlenmittlere Molekulargewicht (gelpermeationschromatographisch unter Verwendung eines Polystyrolstandards bestimmt) liegt typischerweise im Bereich von 1000 bis 15 000, vorzugsweise von 1200 bis 7000, besonders bevorzugt von 1500 bis 5000. Die Glasübergangstemperatur (TG) liegt typischerweise im Bereich von 30 bis 80°C, vorzugsweise von 40 bis 70°C, besonders bevorzugt von 50 bis 70°C (gemessen mit Hilfe der Differentialkalorimetrie (DSC)). Epoxidgruppenhaltige Polyacrylatharze sind bekannt (vgl. z. B. EP-A-299 420, DE-B-22 14 650, DE-B-27 49 576, US-A-4,091,048 und US-A-3,781,379). Beispiele für solche Harze sind Epon 8021, Epon 8111, Epon 8161 der Fa. Hexion.

Die Epoxidharze können sich auch von anderen Epoxiden ableiten (Nichtglycidylether-Epoxidharze). Hierzu zählen insbesondere Verbindungen, einschließlich Oligomeren und Polymeren, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyciohexenyigruppen erhältlich sind. Beispiele für die Epoxidierungsprodukte von Verbindungen mit wenigstens einer cycloolefinischen Gruppe sind 4-Epoxyethyl-1,2-epoxycyclohexan und die Verbindung der folgenden Formel: 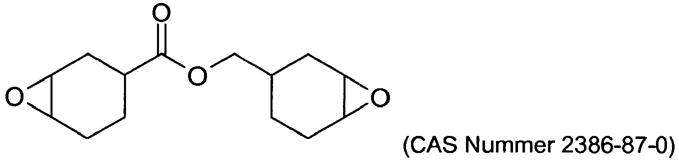 die beispielsweise von der Fa. Cytec unter der Bezeichnung Uvacure 1500 vertrieben wird. Bevorzugt werden die Verbindungen eingesetzt, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind, und deren Oligomere nicht alleine sondern in Kombination mit einer oder mehrerer der vorgenannten Substanzen, die wenigstens zwei Glycidylethergruppen im Molekül aufweisen.

Die vorstehenden Epoxidharze können jeweils als alleinige Epoxidharze oder als Gemisch eingesetzt werden.

### Zu Verbindungen der Formel I

Die Epoxidharz-zusammensetzungen enthalten ein 2-Oxo-[1,3] dioxolanderivat der Formel I 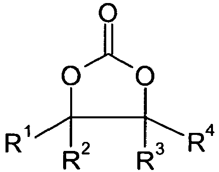 worin einer oder zwei der Reste R1 bis R4 für eine elektronenziehende organische Gruppe mit 1 bis 20 C-Atomen oder ein elektronenziehendes Heteroatom stehen und die übrigen Reste R1 bis R4 unabhängig voneinander für ein H-Atom oder eine Kohlenwasserstoffgruppe mit 1 bis 20 C-Atomen stehen.

Vorzugsweise stehen Reste R1 und R4 oder nur R1 für eine elektronenziehende organische Gruppe mit 1 bis 20 C-Atomen oder elektronenziehendes Heteroatom.

Besonders bevorzugt steht nur Rest R1 für eine elektronenziehende organische Gruppe mit 1 bis 20 C-Atomen oder ein elektronenziehendes Heteroatom.

Die übrigen Reste R1 bis R4 stehen vorzugsweise unabhängig voneinander für ein H-Atom oder eine C1- bis C10-, insbesondere eine C1- bis C4-Alkylgruppe; besonders bevorzugt stehen die übrigen Reste R1 bis R4 für ein H-Atom.

Als elektronenziehendes Heteroatome sei Fluor genannt.

Geeignete elektronenziehende organische Gruppen sind insbesondere
die Nitrilgruppe: 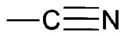 eine Thioestergruppe der Formel 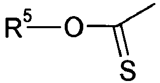 eine Thioestergruppe der Formel 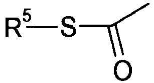 eine Orthoestergruppe der Formel 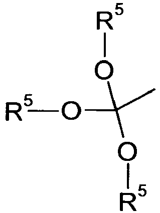 eine Amidgruppe der Formel 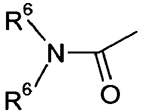 oder eine Estergruppe der Formel 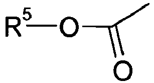 wobei R5 einen Kohlenwasserstoffrest mit 1 bis 20 C-Atomen bedeutet, der gegebenenfalls durch eine oder mehrere funktionelle Gruppen, ausgewählt aus Carbonsäuregruppen, Carbonsäureestergruppen oder Hydroxylgruppen substituiert sein kann und die beiden Reste R6 in der Amidgruppe unabhängig voneinander für ein H-Atom oder einen Rest R5 stehen.

Insbesondere kann R5 in den vorstehenden Formeln z. B. durch eine Carbonsäuregruppe, durch eine oder zwei Hydroxylgruppen oder sowohl durch eine Carbonsäuregruppe als auch ein oder zwei Hydroxylgruppen substituiert sein. Besonders bevorzugt steht R5 jeweils für einen unsubstituierten, aliphatischen, cycloaliphatischen oder aromatischen Kohlenwasserstoffrest mit 1 bis 10 C-Atomen. Ganz besonders bevorzugt steht R5 für eine C1- bis C10- Alkylgruppe, insbesondere eine C1- bis C4-Alkylgruppe, z. B. eine Ethylgruppe oder insbesondere eine Methylgruppe.

Insbesondere handelt es sich bei der elektronenziehenden organischen Gruppe oder bei dem elektronenziehenden Heteroatom um ein Fluoratom, eine Nitrilgruppe, eine Estergruppe der Formel 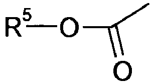 oder eine Amidgruppe der Formel 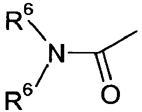 handeln.

Ganz besonders bevorzugt handelt es sich bei der elektronenziehenden organischen Gruppe um eine Estergruppe der Formel

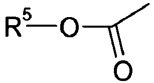

In einer besonderen Ausführungsform handelt es sich bei der Verbindung der Formel I um einen 2-Oxo-[1,3] dioxolan-4-carbonsäureester der Formel IIa 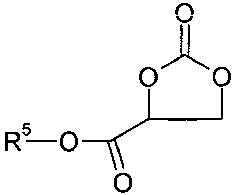 oder einen 2-Oxo-[1,3] dioxolan-4,5-carbonsäurediester der Formel IIb 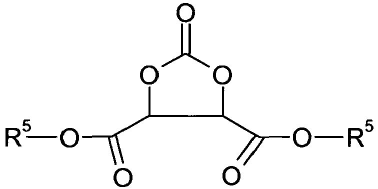 wobei R5 die vorstehende Bedeutung hat.

Ganz besonders bevorzugt sind Verbindungen der Formel IIa oder IIb, bei denen R5 für einen C1- bis C4-Alkylrest, insbesondere einen Methyl- oder Ethylrest, ganz besonderes bevorzugt für einen Methylrest steht.

Ganz besonders bevorzugt sind Verbindungen der Formel IIa.

Unterschiedliche 2-Oxo-[1,3] dioxolanderivate der Formel I können im Gemisch eingesetzt werden.

2-Oxo-[1,3] dioxolanderivate können in bekannter Weise aus den entsprechenden Epoxiden durch Anlagerung von Kohlendioxid (CO₂) hergestellt werden.

Eine entsprechende Herstellung von 2-Oxo-[1,3] dioxolanderivaten der obigen Formel IIa ist in den Patentanmeldungen PCT/EP2011/058945 (PF 70965) und EP 10191334.1 (PF 71469) beschrieben.

Gemäß EP 10191334.1 (PF 71469) werden die 2-Oxo-[1,3] dioxolan-4-carbonsäureester der Formel IIa durch Umsetzung der entsprechenden Oxirane 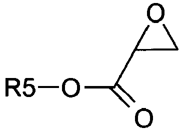 mit CO₂ bei erhöhtem Druck, vorzugsweise von 40 bis 100 bar, und erhöhter Temperatur, vorzugsweise 60 bis 80°C, hergestellt werden.

2-Oxo-[1,3] dioxolanderivate können auch durch Umsetzung von Diolen, bei denen benachbarte Kohlenstoffatome durch Hydroxylgruppen substituiert sind, mit Dialkylcarbonaten unter Abspaltung von Alkanolen, vorzugsweise mit Dimethylcarbonat unter Abspaltung von Methanol oder durch Umsetzung mit Phosgen (COCl₂) unter Abspaltung von HCl hergestellt werden.

So sind 2-Oxo-[1,3] dioxolanderivate der Formel IIb erhältlich durch Umsetzung von Weinsäurediestern, wobei die beiden Estergruppen dem Rest R5 entsprechen, mit Phosgen.

Die Verbindungen der Formel I, bewirken in den Epoxidharz-zusammensetzungen eine Herabsetzung der Viskosität und eine Erhöhung der Reaktivität, letzteres insbesondere bei aminischer Härtung. In der Regel zeigt sich der gewünschte Verdünnungseffekt aber auch die erhöhte Reaktivität bereits bei einem geringen Gehalt der Verbindung der Formeln I.

In der Regel wird man die Verbindung(en) der Formeln I in einer Gesamtmenge von wenigstens 0,1 Gewichtsteilen, häufig wenigstens 0,5 Gewichtsteilen, insbesondere wenigstens 1 Gewichtsteilen, insbesondere auch wenigstens 2 bzw. wenigstens 5 Gewichtsteilen bezogen auf 100 Gewichtsteil der Epoxidharze, verwenden. Häufig wird man die Verbindung(en) der Formeln I in einer Gesamtmenge von höchstens 100 Gewichtsteil, vorzugsweise höchstens 70 Gewichtsteilen, insbesondere höchstens 50 Gewichtsteilen, bezogen auf 100 Gewichtsteile der Epoxidharze, verwenden. Die Epoxidharz-zusammensetzungen enthalten daher Verbindungen der Formel I in Mengen von z. B. 0,1 bis 100 Gewichtsteilen, bevorzugt von 0,1 bis 50 Gewichtsteilen, insbesondere von 0,1 bis 30 Gewichtsteilen auf 100 Gewichtsteile Epoxidharze a), wobei die untere Grenze von 0,1 Gewichtsteilen in bevorzugten Ausführungsformen durch 0,5 bzw. 1, 2 oder 5 Gewichtsteile, wie oben ausgeführt, ersetzt ist.

### Zu weiteren Bestandteilen der Epoxidharz-zusammensetzung

Neben den Epoxidharzen und den Verbindungen der Formel I können die Epoxidharzzusammensetzungen auch konventionelle Reaktivverdünner enthalten. Hierunter versteht man vor allem niedermolekulare Verbindungen mit einem Molekulargewicht von vorzugsweise maximal 250 Dalton, z. B. im Bereich von 100 bis 250 Dalton, die Oxirangruppen, vorzugsweise Glycidylgruppen, z. B. in Form von Glycidylethergruppen, Gylcidylestergruppen oder Glycidylamidgruppen, aufweisen. Die Epoxid-Funktionalität, d. h. die Zahl der Epoxidgruppen pro Molekül liegt bei den Reaktivverdünnern typischerweise im Bereich von 1 bis 3, insbesondere im Bereich von 1,2 bis 2,5. Hierunter bevorzugt sind insbesondere Glycidylether von aliphatischen oder cycloaliphatischen Alkoholen, die vorzugsweise 1, 2, 3 oder 4 OH-Gruppen und 2 bis 20 bzw. 4 bis 20 C-Atome aufweisen, sowie Glycidylether von aliphatischen Polyetherolen, die 4 bis 20 C-Atome aufweisen. Beispiele hierfür sind:
- Glycidylether von gesättigten Alkanolen mit 2 bis 20 C-Atomen, wie beispielsweise C₂-C₂₀-Alkylglycidylether wie 2-Ethylhexylglycidylether oder C12 Alkyl- bis C14-Alkyl Glcidylether;
- Glycidylether von gesättigten Alkanpolyolen mit 2 bis 20 C-Atomen, z. B. die Glycidylether von 1,4-Butandiol, 1,6-Hexandiol, Trimethylolpropan oder von Pentaerythritol, wobei die vorgenannten Glycidylether-Verbindungen in der Regel eine Epoxid-Funktionalität im Bereich von 1 bis 3,0 und vorzugsweise im Bereich von 1,2 bis 2,5 aufweisen;
- Glycidylether von Polyetherolen mit 4 bis 20 C-Atomen, beispielsweise Glycidylether von Diethylenglykol, Triethylenglykol, Tetraethylenglykol, Dipropylenglykol oder Tripropylenglykol;
- Glycidylether von cycloaliphatischen Alkoholen mit 5 bis 20 C-Atomen wie beispielsweise Bisglycidylether von Cyclohexan-1,4-diyl, der Bisglycidylether von kernhydriertem Bisphenol A oder von kernhydriertem Bisphenol F,
- Glycidylether von Polyalkylenoxiden mit 2 bis 4 C-Atomen wie Polyethylenoxid oder Polypropylenoxid;
und Gemische der vorgenannten Substanzen.

Sofern erwünscht, werden die konventionellen Reaktivverdünner in den Epoxidharz-zusammensetzungen in einer Gesamtmenge von wenigstens 1 Gewichtsteilen, häufig wenigstens 2 Gewichtsteilen, insbesondere wenigstens 5 Gewichtsteilen, bezogen auf 100 Gewichtsteil der Epoxidharze, verwendet. Da die Verbindungen der Formel I die durch konventionelle Reaktivverdünner häufig bewirkte Herabsetzung der Reaktivität ausgleichen oder sogar überkompensieren, können die konventionellen Reaktivverdünner in größerer Menge eingesetzt werden als im Stand der Technik. In der Regel wird man jedoch die konventionellen Reaktivverdünner in einer Gesamtmenge von höchstens 100 Gewichtsteil, vorzugsweise höchstens 80 Gewichtsteilen, insbesondere höchstens 70 Gewichtsteilen, bezogen auf 100 Gewichtsteil der Epoxidharzkomponente, verwenden. Vorzugsweise wird die Gesamtmenge an konventionellem Reaktivverdünner plus Verbindung der Formel I nicht mehr als 110 Gewichtsteile, insbesondere nicht mehr als 100 Gewichtsteil und speziell nicht mehr als 90 Gewichtsteile, bezogen auf 100 Gewichtsteil der Epoxidharze betragen. Sofern die erfindungsgemäßen Epoxidharz-zusammensetzungen einen oder mehrere konventionelle Reaktivverdünner enthalten, liegt das Gewichtsverhältnis von Verbindung der Formel I zu konventionellem Reaktivverdünner üblicherweise in einem Bereich von 1 : 100 bis 100 : 1, insbesondere im Bereich von 1 : 50 bis 50 : 1.

In einer anderen besonderen Ausführungsform der Erfindung liegt das Gewichtsverhältnis von Verbindung der Formel I zu konventionellem Reaktivverdünnern im Bereich von 1:10 bis 10:1, insbesondere im Bereich von 1:5 bis 5:1.

Die Epoxidharz-zusammensetzungen können darüber hinaus auch nicht-reaktive, organische Verdünnungsmittel enthalten. Hierunter versteht man organische Lösungsmittel, die bei Normaldruck einen Siedepunkt unterhalb 200°C aufweisen und die mit den Epoxidgruppen und den Gruppen eines gegebenenfalls vorhandenen Reaktivverdünners keine Reaktion unter Bindungsbildung eingehen. Derartige Verdünnungsmittel sind typischerweise organische Lösungsmittel, beispielsweise Ketone mit vorzugsweise 3 bis 8 C-Atomen wie Aceton, Methylethylketon, Cyclohexanon und dergleichen, Ester aliphatischer Carbonsäuren, vorzugsweise der Essigsäure, der Propionsäure oder der Butansäure, insbesondere die C₁-C₆-Alkylester dieser Säuren wie Ethylacetat, Propylacetat und Butylacetat, aromatische Kohlenwasserstoff insbesondere Alkylaromaten wie beispielsweise Toluol, Mesitylen, 1,2,4-Trimethylbenzol, n-Propylbenzol, Isopropylbenzol, Cumol, oder Xylole und Mischungen von Alkylaromaten, insbesondere technische Gemische wie sie beispielsweise als Solvessomarken im Handel erhältlich sind, aliphatische und cycloaliphatische Kohlenwasserstoffe sowie Alkanole mit vorzugsweise 1 bis 8 C-Atomen und Cycloalkanole mit vorzugsweise 5 bis 8 C-Atomen wie Methanol, Ethanol, n- und Isopropanol, Butanole, Hexanole, Cyclopentanol und Cyclohexanol und dergleichen.

In einer bevorzugten Ausführungsform enthält die Epoxidharz-zusammensetzungen nicht reaktive organische Lösemittel allenfalls in untergeordneten Mengen (weniger als 20 Gew.-%, insbesondere weniger als 10 Gew.-% oder weniger als 5 Gew.-%, bezogen auf die Gewichtssumme aus Epoxidharz und Verbindung der Formel I) und besonders bevorzugt enthalten sie kein derartiges Lösemittel (100 % System).

Neben den vorgenannten Bestandteilen kann die Epoxidharz-zusammensetzung die hierfür üblichen Füllstoffe und/oder Additive enthalten.

Geeignete Füllstoffe sind beispielsweise anorganische oder organische partikelförmige Materialien wie beispielsweise Calciumcarbonate und Silikate sowie anorganische Fasermaterialien wie beispielsweise Glasfaser. Auch organische Füllstoffe wie Kohlefaser und Mischungen aus organischen und anorganischen Füllstoffen, wie beispielsweise Mischungen aus Glas- und Kohlefasern oder Mischungen aus Kohlefasern und anorganischen Füllstoffen können Anwendung finden. Die Füllstoffe können in einer Menge von 1 bis 70 Gew.-%, bezogen auf das Gesamtgewicht der Epoxid-Zusammensetzung, zugesetzt werden.

Geeignete herkömmliche Additive umfassen beispielsweise Antioxidantien, UV-Absorber/ Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, Katalysatoren, Adhäsionsregulatoren, optische Aufheller, Flammschutzmittel, Antitropfmittel, Nukleierungsmittel, Verlaufsmittel, Entschäumer, Lösungsmittel und Reaktivverdünner sowie Gemische davon.

Die gegebenenfalls verwendeten Lichtstabilisatoren / UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren, und
t) basische Costabilisatoren.

### Zu den Aminohärtern

Die Epoxidharz-zusammensetzung, welche Epoxidharze, eine oder mehrere Verbindungen der Formel I und gegebenenfalls weitere Bestandteile enthält, wird durch Zugabe von Härtern, welche mit den Epoxidgruppen reagieren, gehärtet. Vorzugsweise handelt es sich dabei um Aminohärter.

Aminhärter vernetzen Epoxidharze durch Reaktion der primären oder sekundären Aminofunktionen der Polyamine mit terminalen Epoxidgruppen der Epoxidharze. Derartige Aminohärter haben mindestens zwei Aminogruppen, im Allgemeinen haben sie 2 bis 6, insbesondere 2 bis 4 Aminogruppen. Bei den Aminogruppen kann es sich um primäre oder sekundäre Aminogruppen handeln.

### Übliche Aminohärter sind beispielsweise

- aliphatischen Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, Trimethylhexamethylendiamin, 1-(3-Aminopropyl)-3-aminopropan, 1,3-Bis-(3-aminopropyl)propan, 4-Ethyl-4-methyl-amino-1-octylamin und dergleichen;
- cycloaliphatische Diamine, wie 1,2-Diaminocyclohexan, 1,3-Bis(aminomethyl)cyclohexan, 1-Methyl-2,4-diaminocyclohexan, 4-(2-Aminopropan-2-yl)-1-methylcyclohexan-1-amin, Isophorondiamin, 4,4'-Diaminodicyclohexylmethan, 3,3'-Dimethyl-4,4'-diaminodicyclohexylmethan, 4,8-Diamino-tricyclo[5.2.1.0]decan, Norbornandiamin, Menthandiamin, Menthendiamin und dergleichen;
- aromatische Diamine, wie Toluylendiamin, Xylylendiamin, insbesondere meta-Xylylendiamin, Bis(4-aminophenyl)methan (MDA oder Methylendianilin), Bis(4-aminophenyl)sulfon (auch als DADS, DDS oder Dapson bekannt) und dergleichen;
- cyclische Polyamine, wie Piperazin, N-Aminoethylpiperazin und dergleichen;
- Polyetheramine, insbesondere difunktionelle und trifunktionelle primäre Polyetheramin auf der Basis von Polypropylenglykol, Polyethylenglykol, Polybutylenoxid, Poly-(1,4-butandiol), Poly-THF oder Polypentylenoxid, z. B. 4,7,10-Trioxatridecan-1,3-diamin, 4,7,10-Trioxatridecan-1,13-diamin, 1,8-Diamino-3,6-dioxaoctan (XTJ-504 von Huntsman), 1,10-Diamino-4,7-dioxadecan (XTJ-590 von Huntsman), 1,12-Diamino-4,9-dioxadodecan (BASF SE), 1,3-Diamino-4,7,10-trioxatridecan (BASF), primäre Polyetheramine auf der Basis von Polypropylenglykol mit einer mittleren Molmasse von 230 wie z. B. Polyetheramine D 230 (BASF SE) oder Jeffamine^{®} D 230 (Huntsman), difunktionelle, primäre Polyetheramine auf der Basis von Polypropylenglykol mit einer mittleren Molmasse von 400, z. B. Polyetheramine D 400 (BASF SE) oder Jeffamine^{®} XTJ 582 (Huntsman), difunktionelle, primäre Polyetheramine auf Basis von Polypropylenglykol mit einer mittleren Molmasse von 2000 wie z. B. Polyetheramine D 2000 (BASF SE), Jeffamine^{®} D2000 oder Jeffamine^{®} XTJ 578 (Huntsman), difunktionelle, primäre Polyetheramine auf der Basis von Propylenoxid mit einer mittleren Molmasse von 4000 wie z. B. Polyetheramin D 4000 (BASF SE), trifunktionelle, primäre Polyetheramine hergestellt durch Reaktion von Propylenoxid mit Trimethylolpropan gefolgt durch eine Aminierung der endständigen OH-Gruppen mit einer mittleren Molmasse von 403 wie z. B. Polyetheramine T 403 (BASF SE) oder Jeffamine^{®}T 403 (Huntsman), trifunktionelle, primären Polyetheramin hergestellt durch Reaktion von Propylenoxid mit Glycerin gefolgt durch eine Aminierung der endständigen OH-Gruppen mit einer mittleren Molmasse von 5000 wie z. B. Polyetheramine T 5000 (BASF SE) oder Jeffamine^{®} T 5000 (Huntsman), aliphatische Polyetheramine, die aus einem mit Propylenoxid gepfropftem Polyethylenglykol aufgebaut sind und eine mittlere Molmasse von 600 aufweisen, wie z. B. Jeffamine^{®} ED-600 bzw. Jeffamine^{®} XTJ 501 (jeweils Huntsman), aliphatische Polyetheramine, die aus einem mit Propylenoxid gepfropftem Polyethylenglykol aufgebaut sind und eine mittlere Molmasse von 900 aufweisen, wie z. B. Jeffamine^{®} ED-900 (Huntsman), aliphatische Polyetheramine, die aus einem mit Propylenoxid gepfropftem Polyethylenglykol aufgebaut sind und eine mittlere Molmasse von 2000 aufweisen, wie z. B. Jeffamine^{®} ED-2003 (Huntsman), difunktionelle, primäre Polyetheramin, hergestellt durch Aminierung eines mit Propylenoxid gepfropften Diethylenglykols mit einer mittleren Molmasse von 220, wie z. B. Jeffamine^{®} HK-511 (Huntsman), aliphatische Polyetheramine auf der Basis eines Copolymers aus Poly-(tetramethylenetherglycol) und Polypropylenglycol mit einer mittleren Molmasse von 1000 wie z. B. Jeffamine^{®} XTJ-542 (Huntsman), aliphatische Polyetheramine auf der Basis eines Copolymers aus Poly(tetramethylenetherglycol) und Polypropylenglycol mit einer mittleren Molmasse von 1900 wie z. B. Jeffamine^{®} XTJ-548 (Huntsman), aliphatische Polyetheramine auf der Basis eines Copolymers aus Poly(tetramethylenetherglycol) und Polypropylenglycol mit einer mittleren Molmasse von 1400 wie z. B. Jeffamine^{®} XTJ-559 (Huntsman), Polyethertriamine auf der Basis eines mit Butylenoxid gepfropftem mindestens dreiwertigen Alkohols mit einer mittleren Molmasse von 400, wie z. B. Jeffamine^{®} XTJ-566 (Huntsman), aliphatische Polyetheramine hergestellt durch Aminierung von mit Butylenoxid aufgepfropften Alkoholen mit einer mittleren Molmasse von 219, wie z. B. Jeffamine^{®} XTJ-568 (Huntsman), Polyetheramine auf der Basis von Pentaerythrit und Propylenoxid mit einer mittleren Molmasse von 600 wie z. B. Jeffamine^{®} XTJ- 616 (Huntsman), Polyetheramine auf der Basis von Triethylenglykol mit einer mittleren Molmasse von 148, z. B. Jeffamine^{®} EDR-148 (Huntsman), difunktionelle, primäre Polyetheramine hergestellt durch Aminierung eines mit Propylenoxid gepfropften Ethylenglykols, mit einer mittleren Molmasse von176 wie z. B. Jeffamine^{®} EDR-176 (Huntsman), sowie Polyetheramine hergestellt durch Aminierung von PolyTHF mit einer mittleren Mollmasse von 250, z. B. PolyTHF-Amin 350 (BASF SE) und Mischungen dieser Amine.
- Polyamidoamine (Amidopolyamine), die durch die Reaktion von Polycarbonsäuren, insbesondere Dicarbonsäuren wie Adipinsäure oder dimeren Fettsäuren (z. B. dimere Linolsäure) mit niedermolekularen Polyaminen, wie Diethylentriamin, 1-(3-Aminopropyl)-3-amino-propan oder Triethylentetramin oder anderen Diaminen wie die zuvor genannten aliphatischen oder cycloaliphatischen Diamine, erhältlich sind oder alternativ durch Michael-Addition von Diaminen an Acrylsäureester und anschließende Polykondensation der erhaltenen Aminosäureester erhältlich sind,
- Phenalkamine (auch Phenolalkanamine), worunter Phenol oder Phenolderivate verstanden werden, welche an mindestens einem C-Atom des Ringsystems durch Kohlenwasserstoffgruppen substituiert sind, welche primäre oder sekundäre Aminogruppen enthalten; abgesehen von der Hydroxylgruppe des Phenols oder Phenolderivats und den primären oder sekundären Aminogruppen enthalten die Phenalkamine keine weiteren funktionellen Gruppen. Insbesondere enthalten die Phenalkamine sowohl primäre als auch sekundäre Aminogruppen. Gut geeignete Phenalkamine enthalten vorzugsweise insgesamt 2 bis 10, insbesondere 2 bis 8 und in einer besondere Ausführungsform 4 bis 6 derartiger Aminogruppen; bevorzugt handelt sind es sich um Phenalkamine auf Basis von Cardanol, welches im Cashew-Schalenöl enthalten ist; auf Cardanol basierende Phenalkamine sind an mindestens einem, vorzugsweise an ein bis drei C-Atomen des Ringsystems durch vorstehend beschriebene, primäre oder sekundäre Aminogruppen enthaltende, vorzugsweise aliphatische Kohlenwasserstoffgruppen substituiert. Insbesondere finden sich diese Substituenten in ortho- oder para-Stellung zur Hydroxylgruppe; Phenalkamine können durch Mannich-Reaktion aus dem Phenol oder Phenolderivat, einem Aldehyd, und einer Verbindung mit mindestens einer primären oder sekundären Aminogruppe hergestellt werden. Bei den Phenalkaminen handelt es sich daher um Mannich-Basen oder Addukte von Aminoverbindungen, insbesondere einer der vorstehenden Amino-verbindungen an Epoxidverbindungen und
- Addukte von Aminoverbindungen an Epoxidverbindungen; derartige Addukte sind Umsetzungprodukte von Epoxidverbindungen mit einem Überschuss an Aminoverbindungen, so dass alle Epoxidgruppen umgesetzt sind und die erhaltenen Verbindungen noch primäre oder sekundäre Aminogruppen aufweisen und diese Addukte daher entsprechend als Aminohärter verwendet werden können. Als Epoxidverbindungen sind hier solche mit einer oder zwei Epoxidgruppen bevorzugt. Als Aminoverbindungen werden für Herstellung von Addukte vorzugsweise niedermolekulare Aminoverbindungen mit primären Aminogruppen eingesetzt, insbesondere solche wie sie weiter unter auch als Aminverbindungen H1 (Cohärter) beschrieben sind. Als Beispiele für Addukte seien die Addukte von Xylenendiamin (MXDA), Isophorondiamin (IPDA) oder Diethylentriamin an Bisphenol A oder Bisphenol F genannt.
sowie Mischungen der vorgenannten Aminhärter.

In einer bevorzugten Ausführungsform werden Mischungen unterschiedlicher Aminohärter, im Nachfolgenden Aminohärter H1 und Aminohärter H2 genannt, verwendet.

Aminohärter H1 sind aliphatische, cycloaliphatische oder aromatische Aminverbindungen mit 1 bis 4 primären Aminogruppen und gegebenenfalls weiteren funktionellen Gruppen, ausgewählt aus sekundären Aminogruppen, tertiären Aminogruppen und Hydroxylgruppen, wobei die primären Aminogruppen im Falle der cycloaliphatischen und aromatischen Aminverbindungen als Aminomethylengruppen (H₂N-CH₂-) an das cycloaliphatische oder aromatische Ringsystem gebunden sind.

Diese Aminohärter H1 werden im Nachfolgenden auch Co-Härter genannt, während andere Aminohärter, die nicht unter die vorstehende Definition der Aminhärter H1 hallen, im Nachfolgenden Aminohärter H2 genannt werden.

### Zu den Aminohärtern H1 (Co-Härter)

Co-Härter können aliphatische, cycloaliphatische oder aromtische Aminverbindungen sein.

Die Co-Härter mit 1 bis 4 primären Aminogruppen enthalten abgesehen von sekundären oder tertiären Aminogruppen oder Hydroxylgruppen keine weiteren funktionellen Gruppen.

Bevorzugte Co-Härter sind z.B. aliphatische Aminverbindungen, welche außer einer primären Aminogruppe keine weiteren funktionellen Gruppen enthalten, z. B. C2- bis C8-Alkylenamine, wie Ethylamin, Propylamin oder Butylamin.

Bevorzugte Co-Härter sind z. B. auch lineare oder verzweigte aliphatische Aminverbindungen, welche zwei primäre Aminogruppen und ansonsten keine weiteren funktionellen Gruppen enthalten, z.B. C2- bis C8-Alkylendiamine, wie Ethylendiamin, Propylendiamin oder Butylendiamin.

Bevorzugte Co-Härter sind z.B. auch aliphatische Aminverbindungen, welche eine oder zwei primäre Aminogruppen und ein oder zwei Hydroxylgruppen und ansonsten keine weiteren funktionellen Gruppen enthalten, z. B. Monoamine, wie C2- bis C8-Alkanolamine, wie Ethanolamin, Isopropanolamin,

Bevorzugte Co-Härter sind z. B. auch aliphatische Aminverbindungen, welche eine primäre Aminogruppe und eine tertiäre Aminogruppe ansonsten keine weiteren funktionellen Gruppen enthalten. Genannt seien z. B. Verbindungen der Formel III

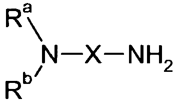

In Formel III stehen R^{a} und R^{b} unabhängig voneinander für eine C1- bis C10-, vorzugsweise eine C1- bis C4- Alkylgruppe. X steht für eine C2- bis C10-, vorzugsweise eine C2- bis C4-Alkylengruppe. Die Alkylengruppe kann verzweigt oder linear sein; sie ist an beliebiger Stelle durch die tertiäre und die primäre Aminogruppe substituiert. In einer bevorzugten Ausführungsform ist die Alkylengruppe linear und endständig durch die tertiäre und primäre Aminogruppe substituiert. Als eine der hier besonders bevorzugten Co-Härter sei z.B. 3-Dimethylaminopropylamin (DMAPA) genannt.

Bevorzugte Co-Härter sind auch aliphatische Aminverbindungen, welche eine oder zwei primäre Aminogruppen, vorzugsweise eine primäre Aminogruppe, und eine sekundäre Aminogruppe und eine Hydroxylgruppe und ansonsten keine weiteren funktionellen Gruppen enthalten. Hierbei handelt es sich insbesondere um N-(2-Aminoalkyl)alkanolamine, z. B. N-(2-Aminoethyl)-ethanolamin (H₂N-CH₂-CH₂-NH-CH₂-CH₂-OH). Bevorzugt haben die bestehen die beiden Alkylengruppen in diesen Verbindungen aus 2 bis 8 C-Atomen.

Bevorzugte aromatische Co-Härter sind z. B. auch durch ein bis drei Aminomethylengruppen (H₂N-CH₂-) substituiertes Benzol. Insbesondere handelt es sich um Benzol, welches durch zwei H₂N-CH₂- Gruppen an beliebiger Position des Benzolrings substituiert ist, z.B. um Xylendiamin mit der Formel

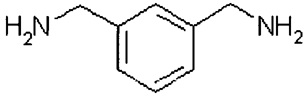

Bevorzugte cycloaliphatische Co-Härter sind z.B. auch durch ein bis drei Aminomethylengruppen (H₂N-CH₂-) substituiertes Cyclohexan. Insbesondere handelt es sich um Cyclohexan, welches durch zwei H₂N-CH₂- Gruppen an beliebiger Position des Benzolrings substituiert ist.

In Betracht kommen natürlich auch beliebige Mischungen der vorstehenden Co-Härter.

Die Co-Härter haben vorzugsweise ein Molekulargewicht kleiner 500 g/mol, insbesondere kleiner 300 g/mol.

Bevorzugte Co-Härter bestehen insgesamt aus maximal 10 C-Atomen, besonders bevorzugte Co-Härter bestehen insgesamt aus maximal 8 C-Atomen.

Von den oben genannten Co-Härtern sind die aliphatischen Verbindungen bevorzugt; besonders bevorzugte aliphatischen Verbindungen sind solche mit nur einer primären Aminogruppe und gegebenenfalls einer tertiären Aminogruppe oder gegebenenfalls einer Hydroxylgruppe und ansonsten keiner weiteren funktionellen Gruppe.

Vorzugsweise ist der Gewichtsanteil der Co-Härter von 2 bis 40 Gew. %, besonders bevorzugt von 5 bis 35 Gew. %, bezogen auf die Gewichtssumme aller Aminohärter.

Die Co-Härter werden vorzugsweise in Mengen von 0,1 bis 30 Gew. teilen, besonders bevorzugt in Mengen von 0,5 bis 20 Gew. teilen, bezogen auf Epoxidharze a) eingesetzt.

Bei den neben den Co-Härtern eingesetzten Aminohärtern handelt es sich um Aminohärter H2, die nicht unter die vorstehende Definition der Co-Härter fallen, wie oben ausgeführt. Der Anteil dieser Aminohärter H2 ist dann entsprechend vorzugsweise 60 bis 98 Gew. %, besonders bevorzugt 65 bis 95 Gew. %, bezogen auf die Gewichtssumme aller Aminhärter.

Derartige Aminohärter H2 sind z.B. Polyamidoamine, Phenalkamine, Epoxy-Aminaddukten, Polyetheraminen oder sonstige von den Aminohärtern H1 (Co-Härtern) verschiedene Aminoverbindungen oder deren Gemische.

Bevorzugt handelt es sich bei den Aminohärtern H2 um Polyamidoamine, Phenalkamine, Epoxy-Aminaddukte, Polyetheramine oder deren Gemische.

Wenn Gemische von verschiedenen Aminohärtern verwendet werden, können sie vorab gemischt und der Epoxidharz-zusammensetzung dann als Mischung zugesetzt werden, sie können jedoch auch separat zugesetzt werden. Sie können auch gleichzeitig oder in Verbindung mit anderen Bestandteilen der Epoxidharz-zusammensetzung zugegeben werden. Als derartige Bestandteile kommen z.B. die oben genannten Additive in Betracht.

Die zur Aushärtung benötigte Gesamtmenge an Aminohärter, bzw. Gewichtssumme aller Aminohärter H1 und H2, bestimmt sich in an sich bekannter Weise über die Anzahl der Epoxidgruppen in der Formulierung und die Anzahl der funktionellen Gruppen im Härter. Die Anzahl der Epoxidgruppen im Epoxidharz wird als sogenanntes Epoxidäquivalent angegeben. Das Epoxidäquivalent wird gemäß DIN 16945 bestimmt.

Die Anzahl der primären und sekundären Aminogruppen kann über die Aminzahl gemäß DIN 16945 berechnet werden.

Die Aminohärter werden vorzugsweise insgesamt in solchen Mengen eingesetzt, dass das Verhältnis der Anzahl aller primären und sekundären Aminogruppen und der Anzahl aller Epoxidgruppen im Epoxidharz 2 : 1 bis 1 : 2, vorzugsweise 1,5 : 1 bis 1 : 1,5 und insbesondere etwa 1 : 1 beträgt. Bei einem stöchiometrischen Verhältnis von etwa 1 : 1 erhält man ein gehärtetes Harz mit optimalen duroplastischen Eigenschaften. Je nach gewünschten Eigenschaften des Harzes nach Vernetzung kann es aber auch sinnvoll sein, Härter und Epoxidharz in anderen Verhältnissen der reaktiven Gruppen einzusetzen.

In den Epoxidharz-zusammensetzungen beträgt dementsprechend die Gesamtmenge an Aminohärtern (Gewichtssumme aus H1 und H2) in der Regel 0,1 Gew.-% bis 50 Gew.-%, häufig 0,5 bis 40 Gew.-% und insbesondere 1 bis 30 Gew.-%, bezogen auf die Gewichtssumme aus Epoxidharz a), Verbindungen der Formeln I, Aminohärter H1 und H2.

Neben Aminohärtern können auch andere Härter, z.B. Anhydridhärter, mitverwendet werden. In einer bevorzugten Ausführungsform werden jedoch ausschließlich Verbindungen Aminverbindungen verwendet.

Als weitere Bestandteile der Epxidharz-zusammensetzungen, bzw. einer separaten Härtermischung, kommen auch Katalysatoren in Betracht, welche die Härtungsreaktion beschleunigen, z.B. Phosphoniumsalze organischer oder anorganischer Säuren, Imidazol und Imidazolderivate oder quartäre Ammoniumverbindungen. Derartige andere Katalysatoren werden, sofern erwünscht, in Anteilen von 0,01 Gew.-% bis etwa 10 Gew.-%, bezogen auf das Gesamtgewicht des Epoxidharzes, der Verbindung I und Gesamtmenge der Aminohärter eingesetzt. In einer bevorzugten Ausgestaltung werden keine derartigen Katalysatoren benötigt, d. h. der Gehalt an derartigen Katalysatoren in der Zusammensetzung beträgt weniger als 0,5, insbesondere weniger als 0,1 Gew.-% bzw. weniger als 0,01 Gew. %.

In einer anderen bevorzugten Ausführungsform können als Katalysatoren Verbindungen der nachstehenden Formel IV 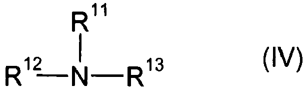 verwendet werden, wobei mindestens einer der Reste R11, R12 und R13 für eine Kohlenwasserstoffgruppe mit 1- bis 10- C-Atomen steht, welche durch eine Hydroxygruppe substituiert ist und gegebenenfalls übrige Reste R11 bis R13 für eine unsubstituierte Kohlenwasserstoffgruppe mit 1- bis 10 C-Atomen stehen.

Vorzugsweise stehen in Formel IV alle drei Reste R11, R12 und R13 für eine Kohlenwasserstoffgruppe mit 1- bis 10- C-Atomen, welche durch eine Hydroxygruppe substituiert ist.

Besonders bevorzugt stehen die Reste R11, R12 und R13 unabhängig voneinander für eine C2- bis C10-Hydroxyalkylgruppe.

Ganz besonders bevorzugt handelt es sich bei der Verbindung der Formel IV um Triethanolamin oder Triisopropanolamin.

Die Verbindung der Formel IV wirkt als Katalysator (Beschleuniger). Sie kann separat oder zusammen mit den Aminohärtern der Epoxidharz-zusammensetzung zugegeben werden.

Die Verbindung der Formel IV können, wenn gewünscht, vorzugsweise in Mengen von 0,1 bis 30 Gew. teilen, besonders bevorzugt in Mengen von 0,5 bis 20 Gew. teilen, bezogen auf Epoxidharze a) eingesetzt werden.

Bei Epoxidharz-zusammensetzungen unterscheidet man grundsätzlich zwischen einkomponentigen- (1 K) und zweikomponentigen- (2K) Systemen. Bei 2K-Systemen bleiben Epoxidharz und Härter bis kurz vor der Härtung getrennt (daher 2K), da das Epoxidharz und der Härter sehr reaktiv sind. Bei 2K-Systemen wird der Härter erst kurz vor der Härtung zu der Epoxidharz-zusammensetzung gegeben.

Die erfindungsgemäße Epoxidharz-zusammensetzungen sind insbesondere 2K-Systeme.

Die Zugabe der Härter, vorzugsweise einer Härtermischung, welche mindestens einen Aminohärter enthält, erfolgt entsprechend erst kurz vor der Verwendung.

Die Zweikomponentige Epoxidharz-zusammensetzung umfasst daher eine separate Epoxidharz-zusammensetzung, welche Epoxidharze, Verbindungen der Formel I und gegebenenfallsweitere Bestandteile, jedoch keine Härter, insbesondere keinen Aminohärter, enthält, und eine separate Härtermischung, welche Härter, vorzugsweise Aminohärter, jedoch keine Epoxidharze enthält.

Die Härtermischung enthält besonders bevorzugt eine Mischung von Aminohärtern H1 und H2 und gegebenenfalls weitere Bestandteile, z. B. auch einen Beschleuniger der Formel IV, wie oben ausgeführt.

Nach Zugabe der Härter zur Epoxidharz-zusammensetzung erfolgt die Härtung.

Die Härtung kann dann thermisch durch Erwärmen der Zusammensetzung erfolgen. Üblicherweise erfolgt die Härtung der Epoxidharz-zusammensetzungen bei Temperaturen im Bereich von -10 bis 200°C, vorzugsweise im Bereich von -10 bis 180°C und insbesondere im Bereich von -10 bis 150°C.

Alternativ kann die Härtung z. B. auch mikrowelleninduziert erfolgen. Insbesondere erfolgt die Härtung bei -10 bis 80°C und in einer besonders bevorzugten Ausführungsform bei -10 bis 40°C bzw. bei -10 bis 20°C. Vorteilhaft ist, dass die Härtung unter normalen Umgebungsbedingungen wie Raumtemperatur und/oder Einwirkung von Sonnenlicht erfolgen kann.

Die Epoxidharz-zusammensetzungen können in vielfältiger Weise eingesetzt werden. Sie eignen sich beispielsweise als Bindemittelbestandteil in Beschichtungs- oder Imprägnierungsmittel, als Klebstoffe, zur Herstellung von Verbundwerkstoffen, insbesondere solchen auf Basis von Kohlefasermaterialien oder Glasfasermaterialien, zur Herstellung von Formkörpern oder als Gießmassen, insbesondere als Gießmassen zur Einbettung, Anbindung oder Verfestigung von Formkörpern. Dies und die nachstehenden Ausführungen dazu gelten sowohl für die 1 K- als auch für 2 K- Systeme, bevorzugte Systeme sind bei allen genannten Verwendungen die 2 K-Systeme.

Als Beschichtungsmittel seien z. B. Lacke genannt. Insbesondere können mit den erfindungsgemäßen Epoxidharz-Zusammensetzungen (1 K oder 2 K), bzw. mit dem erfindungsgemäßen Verfahren kratzfeste Schutzlacke auf beliebigen Substraten, z. B. aus Metall, Kunststoff oder Holzwerkstoffen erhalten werden.

Da die Reaktivität der Epoxidharz-zusammensetzungen vergleichsweise hoch ist, kann die Härtung bei niedrigen Temperaturen, z. B. im Bereich von 0 bis 50°C und insbesondere im Bereich von 5 bis 35°C erfolgen. Dies macht die Epoxidharz-zusammensetzungen in besonderer Weise für die Beschichtung sehr großflächiger Substrate geeignet, die sich nicht oder nur schwierig auf Temperaturen oberhalb der Umgebungstemperatur erwärmen lassen. Hierzu zählt insbesondere die Beschichtung von Böden, insbesondere in stark beanspruchten Bereichen, z. B. zur Beschichtung von Laufbereichen öffentlicher Gebäude oder Plätze oder zur Beschichtung von Parkflächen und Zufahrten von Parkflächen. Hierzu zählt insbesondere auch die Beschichtung großflächiger Metallteile und Metallkonstruktionen, wie sie beispielsweise in oder an Gebäuden oder Schiffen (sog. Marine Coating).

Die Epoxidharz-zusammensetzungen eignen sich auch als Isolierbeschichtungen in elektronischen Anwendungen, z. B. als Isolierbeschichtung für Drähte und Kabel. Genannt sei auch die Verwendung zur Herstellung von Photoresisten. Sie eignen sich insbesondere auch als Reparaturlack, z. B. auch bei der Ausbesserung von Rohren ohne Demontage der Rohre (cure in place pipe (CIPP) rehabilitation). Sie eignen sich auch zur Versiegelung bzw. Beschichtung von Fußböden.

Die Epoxidharz-zusammensetzungen eignen sich auch als Klebstoffe, z. B. 2 K-Strukturklebstoffe. Strukturklebstoffe dienen zur dauerhaften Verbindung von Formteilen miteinander. Die Formteile können aus beliebigem Material sein; in Betracht kommen Materialien aus Kunststoff, Metall, Holz, Leder, Keramik etc. Es kann sich dabei auch um Schmelzklebstoffe (hot melt adhesives) handeln, die erst bei höherer Temperatur fließfähig und verarbeitbar sind. Es kann sich auch um Fußbodenklebstoffe handeln. Die Zusammensetzungen eignen sich auch als Klebstoffe für die Herstellung von Leiterplatten (electronic curcuits), insbesondere auch nach der SMT Methode (surface mounted technology).

Die Epoxidharz-zusammensetzungen eigen sich insbesondere auch zur Herstellung von Verbundwerkstoffen. In Verbundwerkstoffen (Composites) sind unterschiedliche Materialien, z. B. Kunststoffe und Verstärkungsmaterialien (Fasern, Carbonfasern) durch das ausgehärtete Epoxidharz miteinander verbunden.

Die Epoxidharz-zusammensetzungen eignen sich z. B. zur Herstellung von mit Epoxidharzen imprägnierten Fasern oder zur Herstellung von aus Fasern hergestellten vorimprägnierter Garne und Gewebe, z. B. zur Herstellung von Prepregs die zu Verbundwerkstoffen weiterverarbeitet werden. Als Herstellverfahren für Verbundwerkstoffe seien die Härtung von vorimprägnierten Fasern oder Fasergeweben (z. B. Prepregs) nach Lagerung oder aber die Extrusion, Strangziehen (pultrusion), Wickeln (winding) und Resin Transfer Molding (RTM), Resin Infusion Technologies (RI) genannt. Insbesondere können die Fasern bzw. die daraus hergestellten Garne und Gewebe mit der erfindungsgemäßen Zusammensetzung getränkt werden und danach bei einer höheren Temperatur gehärtet werden.

Als Gießmassen zur Einbettung, Anbindung oder Verfestigung von Formkörpern werden die Epoxidharz-zusammensetzungen z. B. in elektronischen Anwendungen eingesetzt. Sie eignen sich als Flip-chip underfill oder als Elektrogießharze für potting, casting und (glob-top-) encapsulation.

Insbesondere eignet sich die Epoxidharz-zusammensetzung für ein Verfahren zur Beschichtung von Oberflächen, bei dem man die Epoxidharz-Zusammensetzung auf die zu beschichtende Oberfläche aufbringt und aushärtet. Dieses Beschichtungsverfahren unterliegt im Hinblick auf die zu beschichtende Oberfläche keinen Beschränkungen. Beispiele für geeignete Oberflächen sind Metalloberflächen, Holzoberflächen, Glasoberflächen, Plastikoberflächen. Ein Fachmann kann durch einfache Vorversuche aber auch feststellen, ob andere Oberflächen für eine Beschichtung entsprechend dem erfindungsgemäßen Verfahren geeignet sind.

Als besondere Vorteile der erfindungsgemäßen Epoxidharz-zusammensetzungen seien die geringe Viskosität durch Mitverwendung von Verbindungen der Verbindungen der Formel I und die guten anwendungstechnischen Eigenschaften und hier insbesondere die hohe Härtungsgeschwindigkeit genannt.

### Beispiele:

Als Epoxidharze der Komponente A wurden die folgenden Substanzen eingesetzt:

### Epoxidharz 1:

Aromatisches Epoxidharz auf Basis von Bisphenol A mit einem Epoxid-Äquivalent von 182 - 192 g/Äquiv. und einer Viskosität bei 25 °C im Bereich von 10 - 14 Pa s (Epilox A 19-03).

### Epoxidharz 2:

Aromatisches Epoxidharz auf Basis von Bisphenol A mit einem Epoxid-Äquivalent von 175-185 g/Äquiv. und einer Viskosität bei 25 °C von 8 - 10 PA.s (Epilox A 18-00)

### Epoxidharz 3:

Cycloaliphatisches Epoxidharz in Form eines hydrierten Glycidylethers auf Basis von Bisphenol A mit einem Epoxid-Äquivalent von 205 - 235 g/Äquiv. und einer Vis-kosität bei 25°C im Bereich von 1,5 - 3,0 Pa.s (Leuna P 22-00)

Als Verbindung der Formel 1 (Dioxolanderivat) wurde die Verbindung der Formel IIa: 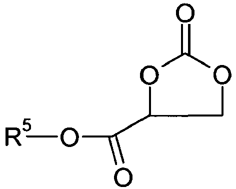 eingesetzt, wobei R5 für eine Methylgruppe steht.

Als Härter wurden die folgenden Substanzen eingesetzt:
Isophorondiamin (IPDA)
Xylenendiamin (MXDA)

GT in den Tabellen bedeutet Gewichtsteile

### 2) Anwendungstechnische Prüfung

### 2.1) Bestimmung der Gelzeit

Zur Bestimmung der Gelzeit wurden rheologische Untersuchungen der Epoxidharz-Zusammensetzungen durchgeführt. Die Reaktivität der Zusammensetzungen wurde durch Überwachung des Reaktionsverlaufs mit einem Rheometer (Oszillations-modus) bestimmt. Zur Auswertung wurde der gemessene Speichermodul G' gegen den Verlustmodul G" aufgetragen. Der Schnittpunkt beider Kurven ist der Gelpunkt. Die entsprechende Zeit ist die Gelzeit. Die Gelzeit ist ein Maß für die Reaktivität der Epoxy-Zusammensetzung. Je kürzer die Gelzeit, desto höher ist die Reaktivität.

Dazu wurden der Härter und der Co-Härter in den in der Tabelle angegebenen Mengen zum Epoxidharz gegeben und unmittelbar in die Meßzelle des Rheometers gegeben. Die Temperatur betrug 23°C.

### 2.2) Bestimmung der Klebfreizeit/Durchtrocknung

Die Bestimmung der Klebfreizeit erfolgte mittels eines Besandungsgerätes, das einen oder mehrere verschließbare Trichter zur Aufnahme von Feinsand (Korngröße bis 600 µm) und jeweils zwei am Auslauf des Trichters angebrachte, schmale Druckrollen aus Metall aufweist, wobei der Trichter horizontal in Laufrichtung der Druckrollen mit konstanter Geschwindigkeit bewegt werden kann. Zur Bestimmung der Klebfreizeit/Durchtrocknung wird die jeweilige Epoxidharz-zusammensetzung mittels eines Rakels auf eine Glasplatte (38*7 cm) appliziert. Unmittelbar im Anschluss daran werden der mit Sand befüllte Trichter und die Druckrollen auf die mit der Epoxidharz-zusammensetzung beschichtete Oberfläche der Glasplatte so aufgesetzt, dass die Druckrollen in Längsrichtung der beschichteten Glasplatte zeigen. Der Verschluss am Auslauf des Trichters wird geöffnet und der Trichter horizontal mit konstanter Geschwindigkeit (1 cm/h oder 10 cm/h) in Richtung der Druckrollen bewegt. Dabei bilden sich eine Sandspur und zwei dazu parallele Druckspuren in der Lackober-fläche aus. Die Messtemperatur liegt bei etwa 23 +/- 2 °C und die Luftfeuchte etwa 50 %. Nach einem vollständigen Durchlauf wird der überschüssige Sand mit einem Pinsel entfernt und die Länger der Druckspuren sowie die Länge der Sandspur be-stimmt. Die Klebfreizeit ergibt sich durch Multiplikation der Länge der Sandspur mit der Geschwindigkeit des Trichters und die Durchtrocknungszeit durch Multiplikation der Länge der Druckspur mit der Geschwindigkeit des Trichters.

### 2.3) Weiterhin wurden die folgenden Untersuchungen vorgenommen:

- Härte PH (Pendelhärte auf verzinktem Stahl in Anlehnung an DIN EN ISO 1522/Methode nach KÖNIG);
- Flexibilität ET (Tiefungsprüfung nach DIN EN ISO 1520);
- (Trocken-) Haftung (Gitterschnittprüfung mit Klebbandabriss nach DIN EN ISO 2409 GT-TR);
- Lösungsmittelbeständigkeit, angelehnt an DIN 68860/68861 und DIN EN 12720.

**Tabelle 1:**

| Gelzeit des aromatischen Epoxidharz 1 | | | | | | |
|---|---|---|---|---|---|---|
| # | Epoxidharz 1 | Verbindung der Formel IIa (Verdünner) | | Härter | | Gelzeit |
| | [GT] | [GT] | | Typ | [GT] | [min] |
| 1 | 10 | | 0 | IPDA | 2,36 | 572 |
| 2 | 9,9 | | 0,1 | IPDA | 2,40 | 480 |
| 3 | 9,75 | | 0,25 | IPDA | 2,45 | 415 |
| 4 | 9,5 | | 0,5 | IPDA | 2,54 | 310 |
| 5 | 9,0 | | 1,0 | IPDA | 2,71 | 242 |
| 6 | 10 | | 0 | MXDA | 1,86 | 434 |
| 7 | 9,9 | | 0,1 | MXDA | 1,90 | 364 |
| 8 | 9,75 | | 0,25 | MXDA | 1,94 | 293 |
| 9 | 9,5 | | 0,5 | MXDA | 2,01 | 247 |
| 10 | 9,0 | | 1,0 | MXDA | 2,15 | 198 |

**Tabelle 2:**

| Klebfreizeiten und Pendeldämpfung einer ausgehärteten Epoxiharzzusammensetzung auf Basis von Epoxidharz 2 | | | | | | |
|---|---|---|---|---|---|---|
| Bestandteil | Epoxidharzzusammensetzung | | | | | |
| | V1 | 1 | 2 | 3 | 4 | 5 |
| A18-00 [GT] | 10 | 9,9 | 9,75 | 9,5 | 9 | 8 |
| Verbindung Formel IIa [GT] | | 0,1 | 0,25 | 0,5 | 1 | 2 |
| IPDA [GT] | 2,39 | 2,42 | 2,48 | 2,56 | 2,74 | 3,09 |
| Klebfreizeit [min] | 60 | 30 | 30 | 30 | <30 | <30 |
| Durchhärtung [min] | 360 | 300 | 240 | 210 | 180 | 120 |
| Pendeldämpfung [s] | 212,8 | 231 | 232,4 | 235,2 | 225,4 | 212,8 |
| [Ausschläge] | 152 | 165 | 166 | 168 | 161 | 152 |

**Tabelle 3:**

| Klebfreizeiten und Pendeldämpfung einer ausgehärteten Epoxiharz-zusammensetzung auf Basis von Epoxiharz 3 | | | | | | |
|---|---|---|---|---|---|---|
| Bestandteil | Epoxidharzzusammensetzung | | | | | |
| | V1 | 1 | 2 | 3 | 4 | 5 |
| P22-00 [GT] | 10 | 9,9 | 9,75 | 9,5 | 9 | 8 |
| Verbindung Formel IIa [GT] | | 0,1 | 0,25 | 0,5 | 1 | 2 |
| IPDA [GT] | 1,95 | 1,99 | 2,05 | 2,15 | 2,35 | 2,74 |
| Klebfreizeit [min] | 360 | 300 | 240 | 210 | 180 | 120 |
| Durchhärtung [min] | 720 | 660 | 600 | 570 | 480 | 240 |
| Pendeldämpfung [s] | 100,8 | 120,4 | 121,8 | 126 | 123,2 | 156,8 |
| [Ausschläge] | 72 | 86 | 87 | 90 | 88 | 112 |

## Patentansprüche

1. Epoxidharz-zusammensetzungen, enthaltend
a) Epoxidharze und
b) mindestens ein 2-Oxo-[1,3] dioxolanderivat der Formel I 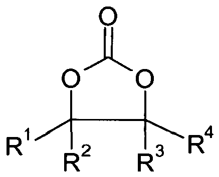
worin einer oder zwei der Reste R1 bis R4 für eine elektronenziehende organische Gruppe mit 1 bis 20 C-Atomen oder ein elektronenziehendes Heteroatom stehen und die übrigen Reste R1 bis R4 unabhängig voneinander für ein H-Atom oder eine Kohlenwasserstoffgruppe mit 1 bis 20 C-Atomen stehen

2. Epoxidharz-zusammensetzungen gemäß Anspruch 1, **dadurch gekennzeichnet, dass** die übrigen Reste R1 bis R4 für ein H-Atom stehen.

3. Epoxidharz-zusammensetzungen gemäß einem der Ansprüche 1 oder 2, **dadurch gekennzeichnet, dass** es sich bei dem elektronenziehenden Heteroatom um ein Fluoratom handelt und bei der elektronenziehenden organischen Gruppe um eine Nitrilgruppe oder eine Estergruppe der Formel 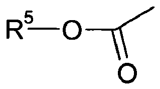 wobei R5 einen Kohlenwasserstoffrest mit 1 bis 20 C-Atomen bedeutet, der gegebenenfalls durch eine oder mehrere funktionelle Gruppen, ausgewählt aus Carbonsäuregruppen, Carbonsäureestergruppen oder Hydroxylgruppen substituiert sein kann
oder eine Amidgruppe der Formel 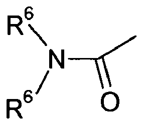 wobei R6 für ein H-Atom oder einen vorstehend definierten Rest R5 stehen kann, handelt

4. Epoxidharz-zusammensetzungen gemäß einem der Ansprüche 1 bis 3, **dadurch gekennzeichnet, dass** es sich bei der Verbindung der Formel I um einen 2-Oxo-[1,3] dioxolan-4-carbonsäureester der Formel IIa 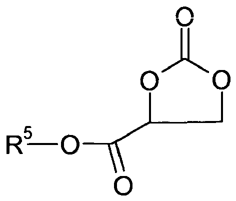 oder einen 2-Oxo-[1,3] dioxolan-4,5-carbonsäurediester der Formel IIb 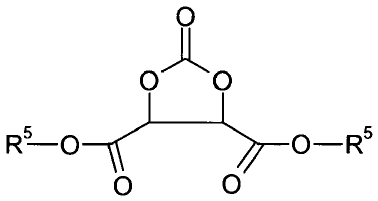 handelt, wobei R5 die vorstehende Bedeutung hat.

5. Epoxidharz-zusammensetzungen gemäß einem der Ansprüche 3 oder 4, **dadurch gekennzeichnet, dass** R5 für eine C1-bis C10-Alkylgruppe steht.

6. Epoxidharz-zusammensetzungen gemäß einem der Ansprüche 3 bis 5, **dadurch gekennzeichnet, dass** R5 für eine Methylgruppe steht.

7. Epoxidharz-zusammensetzung nach einem der Ansprüche 1 bis 6, worin die Komponente a) ausgewählt ist aus Polyglycidylethern von aromatischen, aliphatischen oder cycloaliphatischen Polyolen.

8. Epoxidharz-zusammensetzung nach einem der Ansprüche 1 bis 7, **dadurch gekennzeichnet, dass** die Epoxidharz-zusammensetzung 0,1 bis 100 Gewichtsteile der Verbindung der Formel I auf 100 Gewichtsteile Epoxidharz a) enthält.

9. Zweikomponentige Epoxidharz-zusammensetzung umfassend eine Epoxidharz-zusammensetzung gemäß einem der Ansprüche 1 bis 8 und eine separate Härtermischung, welche mindestens einen Aminohärter enthält.

10. Zweikomponentige Epoxidharz-zusammensetzung gemäß Anspruch 9, **dadurch gekennzeichnet, dass** es sich bei der Härtermischung um eine Mischung von Aminohärtern handelt, welche
mindestens einen Aminohärter H1, ausgewählt aus aliphatischen, cycloaliphatischen oder aromatische Aminverbindungen mit 1 bis 4 primären Aminogruppen und gegebenenfalls weiteren funktionellen Gruppen, ausgewählt aus sekundären Aminogruppen, tertiären Aminogruppen und Hydroxylgruppen, wobei die primären Aminogruppen im Falle der cycloaliphatischen und aromatischen Aminverbindungen als Aminomethylengruppen (H₂N-CH₂-) an das cycloaliphatische oder aromatische Ringsystem gebunden sind,
und mindestens einen Aminohärter H2, ausgewählt aus Polyamidoaminen, Phenalkaminen, Epoxy-Aminaddukten, Polyetheraminen oder sonstigen von Aminhärtern H1 verschiedenen Aminhärtern
enthält.

11. Verwendung von Epoxidharz-zusammensetzungen gemäß einem der Ansprüche 1 bis 10 als oder in Beschichtungsmitteln.

12. Verwendung von Epoxidharz-zusammensetzungen gemäß einem der Ansprüche 1 bis 10 in Gießmassen.

13. Verwendung von Epoxidharz-zusammensetzungen gemäß einem der Ansprüche 1 bis 10 zur Herstellung von Verbundwerkstoffen.

14. Verwendung von Epoxidharz-zusammensetzungen gemäß einem der Ansprüche 1 bis 10 in Strukturklebstoffen.

15. Verwendung von Epoxidharz-zusammensetzungen gemäß einem der Ansprüche 1 bis 10 zur Imprägnierung von Fasern oder aus Fasern hergestellten Garnen oder Geweben.

## Claims

1. An epoxy resin composition comprising
a) epoxy resins and
b) at least one 2-oxo-[1,3] dioxolane derivative of the formula I 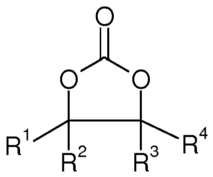 in which one or two of the radicals R1 to R4 are an electron-withdrawing organic group having 1 to 20 C atoms or an electron-withdrawing heteroatom, and the remaining radicals R1 to R4 are independently of one another an H atom or a hydrocarbon group having 1 to 20 C atoms.

2. The epoxy resin composition according to claim 1, wherein the remaining radicals R1 to R4 are an H atom.

3. The epoxy resin composition according to either of claims 1 and 2, wherein the electron-withdrawing heteroatom is a fluorine atom and the electron-withdrawing organic group is a nitrile group or an ester group of the formula 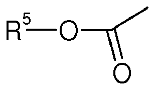 where R5 is a hydrocarbon radical having 1 to 20 C atoms and may optionally be substituted by one or more functional groups selected from carboxylic acid groups, carboxylic ester groups or hydroxyl groups,
or an amide group of formula 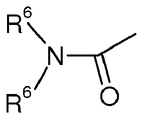 where R6 may be an H atom or an above-defined radical R5.

4. The epoxy resin composition according to any of claims 1 to 3, wherein the compound of the formula I is a 2-oxo-[1,3] dioxolane-4-carboxylic ester of the formula IIa 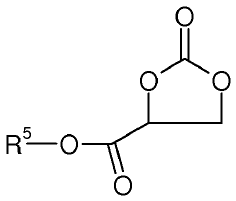 or a 2-oxo-[1,3] dioxolane-4,5-carboxylic diester of the formula IIb 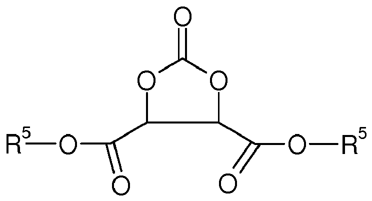 where R5 has the above definition.

5. The epoxy resin composition according to either of claims 3 and 4, wherein R5 is a C1 to C10 alkyl group.

6. The epoxy resin composition according to any of claims 3 to 5, wherein R5 is a methyl group.

7. The epoxy resin composition according to any of claims 1 to 6, in which component a) is selected from polyglycidyl ethers of aromatic, aliphatic or cycloaliphatic polyols.

8. The epoxy resin composition according to any of claims 1 to 7, wherein the epoxy resin composition comprises 0.1 to 100 parts by weight of the compound of the formula I to 100 parts by weight of epoxy resin a).

9. A two-component epoxy resin composition comprising an epoxy resin composition according to any of claims 1 to 8 and a separate hardener mixture which comprises at least one amino hardener.

10. The two-component epoxy resin composition according to claim 9, wherein the hardener mixture comprises a mixture of amino hardeners which comprises
at least one amino hardener H1, selected from aliphatic, cycloaliphatic or aromatic amine compounds having 1 to 4 primary amino groups and optionally further functional groups selected from secondary amino groups, tertiary amino groups, and hydroxyl groups, the primary amino groups, in the case of the cycloaliphatic and aromatic amine compounds, being attached as aminomethylene groups (H₂N-CH₂-) to the cycloaliphatic or aromatic ring system,
and at least one amino hardener H2, selected from polyamidoamines, phenalkamines, epoxy-amine adducts, polyetheramines or other amine hardeners different from amine hardeners H1.

11. The use of epoxy resin compositions according to any of claims 1 to 10 as or in coating materials.

12. The use of epoxy resin compositions according to any of claims 1 to 10 in casting compositions.

13. The use of epoxy resin compositions according to any of claims 1 to 10 for producing composite materials.

14. The use of epoxy resin compositions according to any of claims 1 to 10 in structural adhesives.

15. The use of epoxy resin compositions according to any of claims 1 to 10 for impregnating fibers, or yarns or fabrics produced from fibers.

## Revendications

1. Compositions de résine époxyde, contenant
a) des résines époxyde et
b) au moins un dérivé de 2-oxo-[1,3]dioxolane de formule I 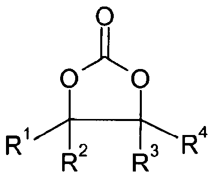
dans laquelle un ou deux des radicaux R1 à R4 représente(nt) un groupe organique attracteur d'électrons comprenant 1 à 20 atomes de carbone ou un hétéroatome attracteur d'électrons et les autres radicaux R1 à R4 représentent, indépendamment les uns des autres, un atome H ou un groupe hydrocarboné comprenant 1 à 20 atomes de carbone.

2. Compositions de résine époxyde selon la revendication 1, **caractérisées en ce que** les autres radicaux R1 à R4 représentent un atome H.

3. Compositions de résine époxyde selon l'une quelconque des revendications 1 ou 2, **caractérisées en ce qu'**il s'agit, pour l'hétéroatome attracteur d'électrons, d'un atome de fluor et, pour le groupe organique attracteur d'électrons, d'un groupe nitrile ou d'un groupe ester de formule 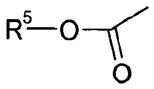 R5 signifiant un radical hydrocarboné comprenant 1 à 20 atomes de carbone, qui peut le cas échéant être substitué par un ou plusieurs groupes fonctionnels, choisis parmi les groupes acide carboxylique, les groupes ester d'acide carboxylique ou les groupes hydroxyle, ou d'un groupe amide de formule 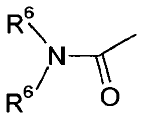 R6 pouvant représenter un atome H ou un radical R5 défini ci-dessus.

4. Compositions de résine époxyde selon l'une quelconque des revendications 1 à 3, **caractérisées en ce qu'**il s'agit, pour le composé de formule I, d'un ester d'acide 2-oxo-[1,3]dioxolane-4-carboxylique de formule IIa 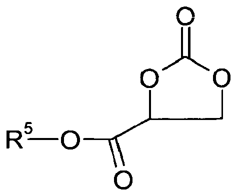 ou d'un diester d'acide 2-oxo-[1,3]dioxolane-4,5-carboxylique de formule IIb 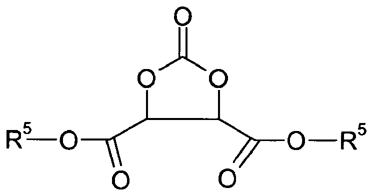 R5 ayant la signification ci-dessus.

5. Compositions de résine époxyde selon l'une quelconque des revendications 3 ou 4, **caractérisées en ce que** R5 représente un groupe C₁-C₁₀-alkyle.

6. Compositions de résine époxyde selon l'une quelconque des revendications 3 à 5, **caractérisées en ce que** R5 représente un groupe méthyle.

7. Composition de résine époxyde selon l'une quelconque des revendications 1 à 6, le composant a) étant choisi parmi les polyglycidyléthers de polyols aromatiques, aliphatiques ou cycloaliphatiques.

8. Composition de résine époxyde selon l'une quelconque des revendications 1 à 7, **caractérisée en ce que** la composition de résine époxyde contient 0,1 à 100 parties en poids du composé de formule I pour 100 parties en poids de résine époxyde a).

9. Composition de résine époxyde à deux composants comprenant une composition de résine époxyde selon l'une quelconque des revendications 1 à 8 et un mélange durcisseur séparé, qui contient au moins un durcisseur de type amino.

10. Composition à deux composants de résine époxyde selon la revendication 9, **caractérisée en ce qu'**il s'agit, pour le mélange durcisseur, d'un mélange de durcisseurs de type amino, qui contient au moins un durcisseur de type amino H1, choisi parmi les composés d'amine aliphatiques, cycloaliphatiques ou aromatiques, comprenant 1 à 4 groupes amino primaires et le cas échéant d'autres groupes fonctionnels, choisis parmi les groupes amino secondaires, les groupes amino tertiaires et les groupes hydroxyle, les groupes amino primaires étant liés, dans le cas des composés d'amine cycloaliphatiques et aromatiques, sous forme de groupes aminométhylène (H₂N-CH₂-) au système cyclique cycloaliphatique ou aromatique,
et au moins un durcisseur de type amino H2, choisi parmi les polyamidoamines, les phénalcamines, les produits d'addition d'époxy-amine, les polyétheramines ou d'autres durcisseurs de type amine différents des durcisseurs de type amine H1.

11. Utilisation de compositions de résine époxyde selon l'une quelconque des revendications 1 à 10 comme ou dans des agents de revêtement.

12. Utilisation de compositions de résine époxyde selon l'une quelconque des revendications 1 à 10 dans des masses coulées.

13. Utilisation de compositions de résine époxyde selon l'une quelconque des revendications 1 à 10 pour la fabrication de matériaux composites.

14. Utilisation de compositions de résine époxyde selon l'une quelconque des revendications 1 à 10 dans des adhésifs structurés.

15. Utilisation de compositions de résine époxyde selon l'une quelconque des revendications 1 à 10 pour l'imprégnation de fibres ou de fils ou de tissus fabriqués à partir de fibres.
